# EUROPEAN PATENT APPLICATION

(11) **EP 4 287 089 A1**
(43) Date of publication of application: **06.12.2023**
(21) Application number: 23176339.2
(22) Date of filing: 31.05.2023
(51) Int. Cl.: G06Q 10/0631, G06Q 10/0637, G06Q 10/1091, G06Q 10/20

(54) **APPARATUS, METHOD AND PROGRAM**

(30) Priority: 31.05.2022 JP 2022088456
(71) Applicant: Yokogawa Electric Corporation, Musashino-shi, Tokyo 180-8750 (JP)
(72) Inventor: OISHI, Kenji, Musashino-shi, Tokyo, 180-8750 (JP); UEMURA, Hideo, Musashino-shi, Tokyo, 180-8750 (JP); AL-NASER, Mustafa, 31952 Al-Khobar (AE); ALAMOUDI, Abrar Saeed, 31952 Al-Khobar (AE); ALNAJIM, Abdullah, 31952 Al-Khobar (AE)
(74) Representative: Hoffmann Eitle

(57) **Abstract**

Provided is an apparatus, including: a database connection unit connected to a database for storing a plurality of groups respectively including abnormality information about an abnormality occurred in a facility and an actual work performance for addressing the abnormality; a report acquirement unit for acquiring a report of an abnormality occurred in the facility; a working plan acquirement unit for acquiring a working plan for addressing an abnormality occurred in the facility; a similarity calculation unit for calculating a similarity between abnormality information in the report and abnormality information included in each of the plurality of groups; a selection unit for selecting at least one group from the plurality of groups based on a similarity calculated by the similarity calculation unit; a difference detection unit for detecting a difference between the working plan and the actual work performance of the at least one group; and a display processing unit for conducting display processing for displaying the difference.

## Description

### BACKGROUND

### 1. TECHNICAL FIELD

The present invention relates to an apparatus, a method and a program.

### 2. RELATED ART

In Patent Document 1, it is described that "this invention relates to a maintenance operation support system for supporting maintenance work of a food manufacturing plant, and in particular to a maintenance operation support system capable of presenting an appropriate recommended time for maintenance to a plant user when maintenance of the plant's component facility is to be performed" (paragraph 0001), and it is described to include "a means for confirming the experimental result data, configured to determine whether the above difference is within an allowable range by referring to the above experimental result database when there is a discrepancy between the operable period of the above food manufacturing plant's component facility and the above actual maintenance performance, and a means for drafting corrective action for the maintenance plan, configured to draft a corrective action of the maintenance plan when the above difference exceeds the allowable range as a result of performing determination by the means for confirming the above experimental result data" (claim 3).

### Prior Art Document

### Patent Document

Patent Document 1: Japanese Patent Application Publication No. 2010-128607.

### SUMMARY

In a first aspect of the present invention, provided is an apparatus, including: a database connection unit connected to a database for storing a plurality of groups respectively including abnormality information about an abnormality occurred in a facility and an actual work performance for addressing the abnormality; a report acquirement unit for acquiring a report of an abnormality occurred in the facility; a working plan acquirement unit for acquiring a working plan for addressing an abnormality occurred in the facility; a similarity calculation unit for calculating a similarity between abnormality information in the report and abnormality information included in each of the plurality of groups; a selection unit for selecting at least one group from the plurality of groups based on a similarity calculated by the similarity calculation unit; a difference detection unit for detecting a difference between the working plan and the actual work performance of the at least one group; and a display processing unit for conducting display processing for displaying the difference.

In the above-described apparatus, the selection unit may select, with a higher priority, a group including abnormality information with a higher similarity among the plurality of groups.

The apparatus according to any one described above may include a relevant information acquirement unit for acquiring relevant information related to a difference between a working plan and an actual work performance of at least one group. The display processing unit may include a relevant information display processing unit for conducting processing for displaying the relevant information on a display apparatus.

In the apparatus according to any one described above, the difference detection unit may detect the difference between the working plan and the actual work performance of the at least one group based on a difference of each item between the working plan and the actual work performance of the at least one group, including at least one of a number of worker, working time, or tools used in a work.

In the apparatus according to any one described above, for an item with a difference of each item between the working plan and the actual work performance of the at least one group exceeding a predetermined threshold, the display processing unit may include a risk display processing unit for conducting processing for displaying an incident risk that may occur due to the difference of the item on a display apparatus.

The apparatus according to any one described above may include a judgement unit for judging an allowable range of the working plan by using the at least one group selected by the selection unit and a determination unit for determining whether the working plan is within the allowable range.

The apparatus according to any one described above may include an error output unit for outputting an error according to a fact that there has been a discrepancy in each item included in the working plan and each item included in the actual work performance of the at least one group.

In the apparatus according to any one described above, the display processing unit may include a difference display processing unit for conducting processing for comparing and emphasizing an item with a difference of each item between the working plan and the actual work performance of the at least one group exceeding a predetermined threshold to another item, and displaying the item on a display apparatus.

The apparatus according to any one described above may further include an adding unit for adding a group of abnormality information about an abnormality occurred in the facility and a working plan used to address the abnormality to the database as a group of abnormality information and an actual work performance.

In as second aspect of the present invention, provided is a method, including acquiring, by a computer, a report of an abnormality occurred in a facility; and acquiring, by the computer, a working plan for addressing an abnormality occurred in the facility; accessing, by the computer, to a database for storing a plurality of groups respectively including abnormality information about an abnormality occurred in the facility and an actual work performance for addressing the abnormality; calculating, by the computer, a similarity between abnormality information in the report and abnormality information included in each of the plurality of groups; selecting, by the computer, at least one group from the plurality of groups based on a calculated similarity; detecting, by the computer, a difference between the working plan and an the actual work performance of the at least one group; and conducting display processing for displaying the difference.

In a third aspect of the present invention, provided is a program, when executed by a computer, causing the computer to function as a database connection unit connected to a database for storing a plurality of groups respectively including abnormality information about an abnormality occurred in a facility and an actual work performance for addressing the abnormality; a report acquirement unit for acquiring a report of an abnormality occurred in the facility; a working plan acquirement unit for acquiring a working plan for addressing an abnormality occurred in the facility; a similarity calculation unit for calculating a similarity between abnormality information in the report and abnormality information included in each of the plurality of groups; a selection unit for selecting at least one group from the plurality of groups based on a similarity calculated by the similarity calculation unit; a difference detection unit for detecting a difference between the working plan and the actual work performance of the at least one group; and a display processing unit for conducting display processing for displaying the difference.

The summary clause does not necessarily describe all necessary features of the embodiments of the present invention. In addition, the present invention may also be a sub-combination of the features described above.

### BRIEF DESCRIPTION OF THE DRAWINGS

Fig. 1 illustrates a configuration of an apparatus 100 according to the present embodiment together with a facility 10 and so on.
Fig.2 illustrates an example of a data structure of a DB 130.
Fig. 3A illustrates an operation flow of the apparatus 100 according to the present embodiment.
Fig. 3B illustrates a continuation of the operation flow of the apparatus 100 according to the present embodiment.
Fig. 4 illustrates a first display example by the apparatus 100 according to the present embodiment.
Fig. 5 illustrates a second display example by the apparatus 100 according to the present embodiment.
Fig. 6 illustrates an example of a computer 2200 in which a plurality of aspects of the present invention may be wholly or partly embodied.

### DESCRIPTION OF EXEMPLARY EMBODIMENTS

Hereinafter, an embodiment of the present invention will be described, but the embodiment does not limit the invention according to the claims. In addition, not all combinations of features described in the embodiment are essential to the solution of the invention.

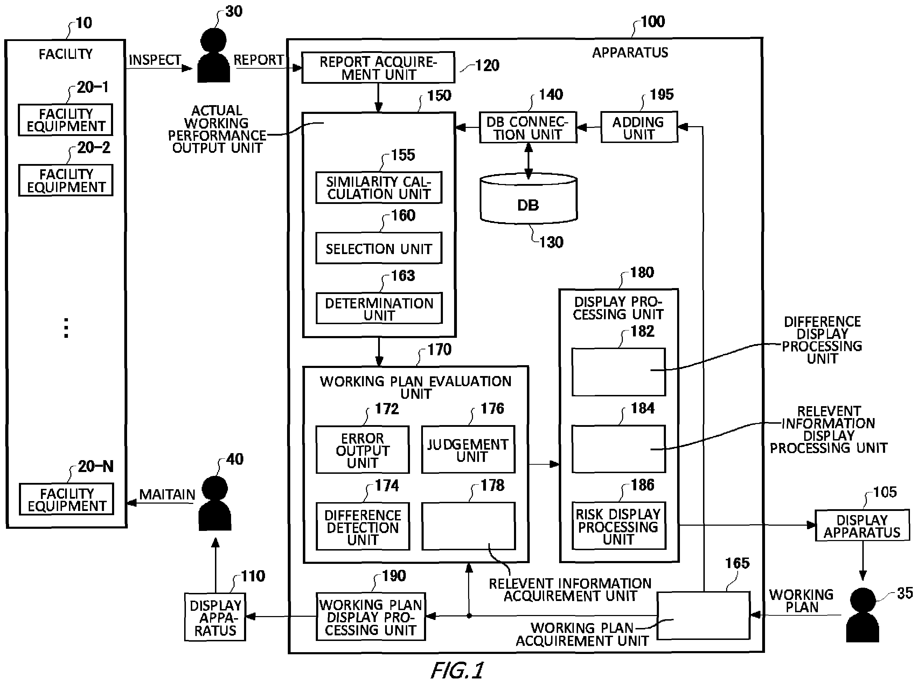

Fig. 1 illustrates a configuration of an apparatus 100 according to the present embodiment together with a facility 10 and so on. The facility 10 is provided in a plant or the like. Such a plant may be, for example, an industrial plant such as a chemical or metal plant; a plant for managing and controlling a well site such as a gas field and an oil field and its surroundings; a plant for managing and controlling electrical power generation such as hydraulic, thermal, and nuclear power generation; a plant for managing and controlling energy harvesting such as solar photovoltaic and wind power generation; a plant for managing and controlling water supply and sewerage, a dam, or the like, etc. Moreover, the facility 10 may be provided in a building, various industrial plants, means of transportation, or the like. Such a facility 10 may have one or more processing apparatuses, one or more power generation apparatuses, and one or more facility equipment 20-1 to N that is other one or more apparatuses (also indicated as "facility equipment 20").

Each of the one or more facility equipment 20 may have field equipment. The field equipment may be, for example, sensor equipment such as a pressure meter, a flowmeter, and a temperature sensor; valve equipment such as a flow control valve and an on-off valve; actuator equipment such as a fan and a motor; imaging equipment such as a camera or a video for photographing a situation of a plant or the like and an object such as a facility; acoustic equipment such as a microphone or a speaker for collecting an abnormal noise from a plant, a facility, or the like, etc. or emitting a warning sound or the like; position detection equipment for outputting positional information of an apparatus provided in the facility 10; or other equipment. In each of the one or more facility equipment 20, one or more sensors configured to function as the sensor equipment, imaging equipment or acoustic equipment or the like for monitoring these states may be provided.

One or more inspectors 30 inspect respective facility equipment 20 inside the facility 10. When an abnormality occurs in the facility 10, an inspector 30 provides a report of the abnormality occurred in the facility 10 to the apparatus 100.

An administrator 35 manages the maintenance of the facility 10. When an abnormality occurs in the facility 10, the administrator 35 receives a report about the abnormality occurred in the facility 10. The administrator 35 drafts a working plan to address the abnormality occurred in the facility 10, and provides the working plan to the apparatus 100.

The apparatus 100 evaluates the working plan by using the actual work performance of the works conducted on similar abnormalities in the past, according to the report of the abnormality and the acquirement of the working plan. The apparatus 100 may be achieved by a computer such as a PC (personal computer), a tablet computer, a smartphone, a work station, a server computer, a general-purpose computer or the like, or may be achieved by a computer system connected with a plurality of computers. Such a computer system is also a computer in a broad sense. The apparatus 100 may be a dedicated computer designed for monitoring of the facility 10, or may be a dedicated hardware achieved by a dedicated circuitry.

A display apparatus 105 is connected to the apparatus 100 by wire or wirelessly. The display apparatus 105 displays the evaluation result of the working plan output by the apparatus 100 to the administrator 35. The display apparatus 105 may be a computer such as a PC (personal computer) or the like used by the administrator 35. Alternatively, a display apparatus 110 may be a computer such as a tablet computer or a smartphone that is portable for the administrator 35. The apparatus 100 acquires the working plan appropriately modified by the administrator 35 according to the evaluation result displayed on the display apparatus 105.

The display apparatus 110 is connected to the apparatus 100 by a wire or wirelessly. The display apparatus 110 displays the working plan output by the apparatus 100. The display apparatus 110 may be a computer such as a PC (personal computer) or the like used by a worker 40. Alternatively, the display apparatus 110 may be a computer such as a tablet computer or a smartphone that is portable for the worker 40.

One or more workers 40 conduct the preparation of the maintenance work of the facility 10 (maintenance preparation work) and maintain the facility 10 (maintenance work) according to the working plan displayed on the display apparatus 110. In this manner, the worker 40 resolves the abnormality reported by the inspector 30.

The apparatus 100 according to the present embodiment includes a report acquirement unit 120, a database 130 (DB 130), a DB connecting unit 140, an actual work performance output unit 150, a working plan acquirement unit 165, a working plan evaluation unit 170, a display processing unit 180, a working plan display processing unit 190 and an adding unit 195. The report acquirement unit 120 acquires a report of an abnormality occurred in the facility 10. The report acquirement unit 120 according to the present embodiment receives a report input into the computer such as a PC, a tablet computer, a smartphone or the like used by the inspector 30 via wired or wireless communication. The report acquirement unit 120 may receive a notification of the abnormality detected by the sensor provided in one or more facility equipment 20, from a monitoring apparatus that monitors the facility 10 or the like, as the report of the abnormality.

The DB 130 is an external storage device, such as a semiconductor memory, a hard disk or the like of the apparatus 100. Alternatively, the DB 130 is provided outside the apparatus 100, and may be a cloud storage or a NAS (Network Attached Storage) or the like connected to the apparatus 100 via a wired or wireless network. The DB 130 stores a plurality of groups, each including abnormality information about the abnormality occurred in the facility 10 and the actual work performance for addressing the abnormality. With respect to the abnormality occurred in the past, the DB 130 may store the groups of the abnormality information and the actual work performance. Also, in addition to the groups of the abnormality information and the actual work performance, or instead of these groups, for various abnormalities predefined to be those that may occur in the facility 10, the DB 130 may store the groups of the abnormality information and the working plans that are planned for the cases when the abnormality occurs.

The DB connecting unit 140 is connected to the DB 130. The DB connecting unit 140 accesses to the DB 130 according to requests from each component inside the apparatus 100.

The actual work performance output unit 150 is connected to the report acquirement unit 120 and the DB connecting unit 140. The actual work performance output unit 150 outputs the actual work performance for addressing the abnormality shown as the abnormality information in the report acquired by the report acquirement unit 120. In the present embodiment, the actual work performance output unit 150 retrieves and outputs the actual work performance for the abnormality that is the same as or similar to the abnormality shown in the report from the actual work performance of each abnormality stored in the DB 130.

The actual work performance output unit 150 includes a similarity calculation unit 155 and a selection unit 160. The similarity calculation unit 155 accesses to the DB 130 via the DB connecting unit 140, and calculate the similarity between the abnormality information in the report acquired by the report acquirement unit 120, and the abnormality information included in each of the plurality of groups stored in the DB 130. The selection unit 160 selects one or two or more groups from the plurality of groups stored in the DB 130 based on the similarity calculated by the similarity calculation unit 155.

Herein, the selection unit 160 may select with higher priority the group including the abnormality information with a higher similarity calculated by the similarity calculation unit 155 among the abnormality information included in each of the plurality of groups stored in the DB 130, as the group including the actual work performance for addressing the abnormality shown in the report. In this manner, the selection unit 160 can select at least one actual work performance for addressing the abnormality similar to the abnormality of the present cycle.

The actual work performance output unit 150 may include a determination unit 163. The determination unit 163 determines an allowable range of the working plan about, for example, the number of workers and so on for addressing the abnormality of the present cycle, by using at least one group selected by the selection unit 160. Note that when it is unnecessary to confirm whether the working plan is within the allowable range, the actual work performance output unit 150 may not include the determination unit 163.

The working plan acquirement unit 165 acquires the working plan for addressing the abnormality of the present cycle that occurred in the facility 10 and has its report acquired by the report acquirement unit 120. The working plan acquirement unit 165 according to the present embodiment receives the report input into a computer such as a PC, a tablet computer or a smartphone or the like by the administrator 35 who receives the report of the abnormality, via wired or wireless communication.

The working plan evaluation unit 170 is connected to the actual work performance output unit 150 and the working plan acquirement unit 165. The working plan evaluation unit 170 evaluates the working plan of the present cycle acquired by the working plan acquirement unit 165 by using at least one actual work performance selected by the actual work performance output unit 150. The working plan evaluation unit 170 includes an error output unit 172, a difference detection unit 174, a judgement unit 176 and a relevant information acquirement unit 178.

The error output unit 172 outputs an error according to that there has been a discrepancy between each item included in the working plan and each item included in the actual work performance of at least one group selected by the selection unit 160. In this manner, the error output unit 172 can inform the administrator 35 when there is a discrepancy between the working plan and the actual work performance, not only in the content of the items, but also in the items themselves, and prompt updating the data format in the DB 130 and so on.

The difference detection unit 174 detects the difference between the working plan and the actual work performance of at least one group selected by the selection unit 160. The difference detection unit 174 may detect the difference of each of one or more items included in the working plan and the actual work performance.

The judgement unit 176 judges whether the working plan is within the allowable range by using the allowable range determined by the determination unit 163. Note that when it is unnecessary to confirm whether the working plan is within the allowable range, the working plan evaluation unit 170 may not include the judgement unit 176.

The relevant information acquirement unit 178 acquires relevant information related to the difference between the working plan and the actual work performance of at least one group that is selected. The relevant information may be descriptions, advices, or notes or the like about an item with a difference. Note that when it is unnecessary to present the relevant information, the working plan evaluation unit 170 may not include the relevant information acquirement unit 178.

The display processing unit 180 is connected to the working plan evaluation unit 170. The display processing unit 180 conducts display processing to display the evaluation result of the working plan on the display apparatus 105, such as the difference between the working plan and the selected actual work performance. Herein, conducting the processing for displaying the screen is not limited to displaying the screen actually on the display apparatus of the apparatus 100 itself, but also include generating display data for displaying the screen on a remote display apparatus such as the display apparatus 105 and so on. The display processing unit 180 includes a difference display processing unit 182, a relevant information display processing unit 184, and a risk display processing unit 186.

The difference display processing unit 182 conducts display processing for displaying the difference detected by the difference detection unit 174 on the display apparatus 105. The relevant information display processing unit 184 conducts processing for displaying the relevant information acquired by the relevant information acquirement unit 178 on the display apparatus 105. Note that when it is unnecessary to present the relevant information, the display processing unit 180 may not include the relevant information display processing unit 184.

For the item in the case where the difference of each item between the working plan and the actual work performance of at least one group exceeds a predetermined threshold, the risk display processing unit 186 conducts processing for displaying the incident risk that may occur due to the difference of the item on the display apparatus 105. In this manner, for the item that deviates significantly between the working plan and the actual work performance, the risk display processing unit 186 can warn the administrator 35 about the possibility of the occurrence of the problem due to this. Note that when it is unnecessary to present the incident risk, the display processing unit 180 may not include the risk display processing unit 186.

The display processing unit 180 can make the administrator 35 to correct the working plan as necessary by providing the difference between the working plan and the actual work performance, the relevant information related to the difference and the incident risk along with the difference to the administrator 35.

The working plan display processing unit 190 is connected to the working plan acquirement unit 165. The working plan display processing unit 190 receives the working plan created, appropriately modified and confirmed by the administrator 35 from the working plan acquirement unit 165. The working plan display processing unit 190 conducts the display processing for displaying the received working plan on the display apparatus 110. Accordingly, the worker 40 can conduct maintenance work and so on to address the abnormality of the present cycle occurred in the facility 10.

The adding unit 195 is connected to the working plan acquirement unit 165. The adding unit 195 adds the group of the abnormality information about the abnormality of the present cycle occurred in the facility 10 and the working plan used to address the abnormality to the DB 130 via the DB connecting unit 140, as the group of the abnormality information and the actual work performance. In this manner, the adding unit 195 registers the actual work performance of the present cycle to the DB 130, making it available for the abnormalities occurred in the next and subsequent cycles.

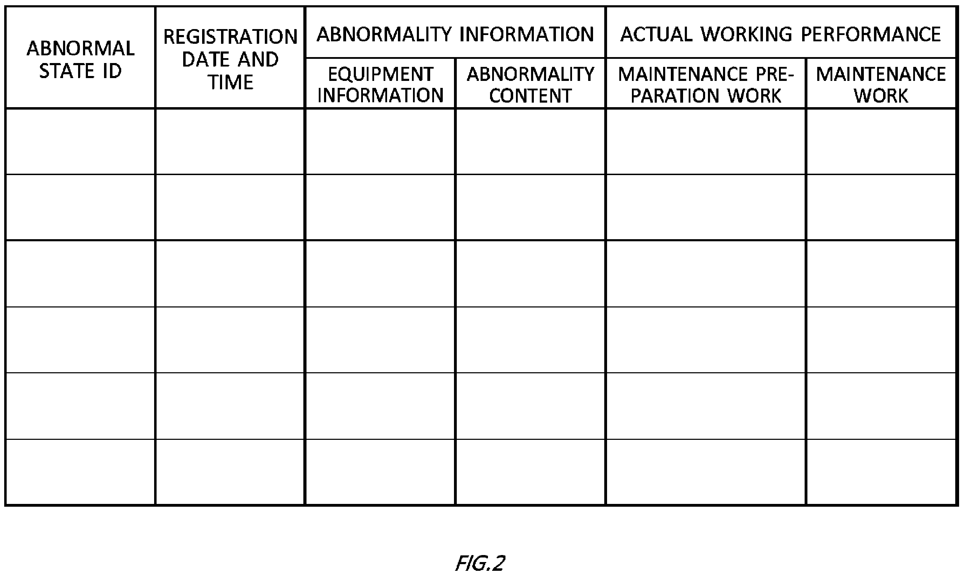

Fig.2 illustrates an example of the data structure of the DB 130. The DB 130 according to the present embodiment includes abnormality state ID, registration date and time, abnormality information, and information related to the actual work performance for each of the plurality of groups (records).

The abnormality state ID is abnormality identification information for identifying the abnormality indicated by the abnormality information in the record. The report acquirement unit 120 assigns the abnormality state ID for the reported abnormality every time a report of the abnormality occurred in the facility 10 is received. The adding unit 195 adds the abnormality information and the actual work performance to the DB 130 by associating the abnormality state ID assigned to the abnormality indicated by the abnormality information. The registration date and time indicates the date and time when the record is registered to the DB 130.

The abnormality information shows details of the abnormality shown in the report. The abnormality information includes the equipment information for specifying the facility equipment 20 where the abnormality has occurred, and the abnormality content. The equipment information includes information about each of the one or more items related to the facility equipment 20 where the abnormality has occurred, the one or more items being at least one of a product name, product identification information, a type (for example, pump, reactor, power supply), specifications, an installation location or installation status and so on.

The abnormality content indicates the content of the abnormality occurred in the facility equipment 20 shown in the equipment information. The abnormality content may include information (for example, checks by the inspector 30) indicating whether there is an occurrence for each abnormal item, such as at least one of liquid leakage, abnormal vibration, abnormal noise, or ignition, for example. Also, the abnormality content may include information designating the type of the abnormality or the specialized department or specialized team that should respond to the abnormality, for example. Also, the abnormality content may include information indicating the priority for addressing the abnormality. Also, the abnormality content may include detailed descriptions of the abnormality by text, which is input by the inspector 30.

The actual work performance is information related to the actual work performance for addressing the abnormality indicated by the abnormality information (also shown as "work record"). The DB 130 may store the actual work performance including the maintenance preparation work conducted during the maintenance work and before the maintenance work for each of the plurality of groups.

The information related to the maintenance preparation work may include information indicating whether each preparation item is necessary, such as, for example, at least one of whether various tools are necessary, whether safety equipment is necessary to be installed, whether scaffolding is necessary to be assembled, or whether a notification is necessary. Also, the maintenance preparation work information may include information on the numerical value related to the maintenance preparation work, such as at least one of the number of workers, the working time or the cost required in the maintenance preparation work.

The information related to the maintenance work may include information indicating whether each work item is necessary, for example, whether various maintenance work processes (line stoppage, repair, replacement, cleaning, adjustment and so on) are necessary and so on. Also, the maintenance work information may include information on the numerical value related to the maintenance work, such as at least one of the number of workers, the required skill of the worker, the working time or the cost required in the maintenance work.

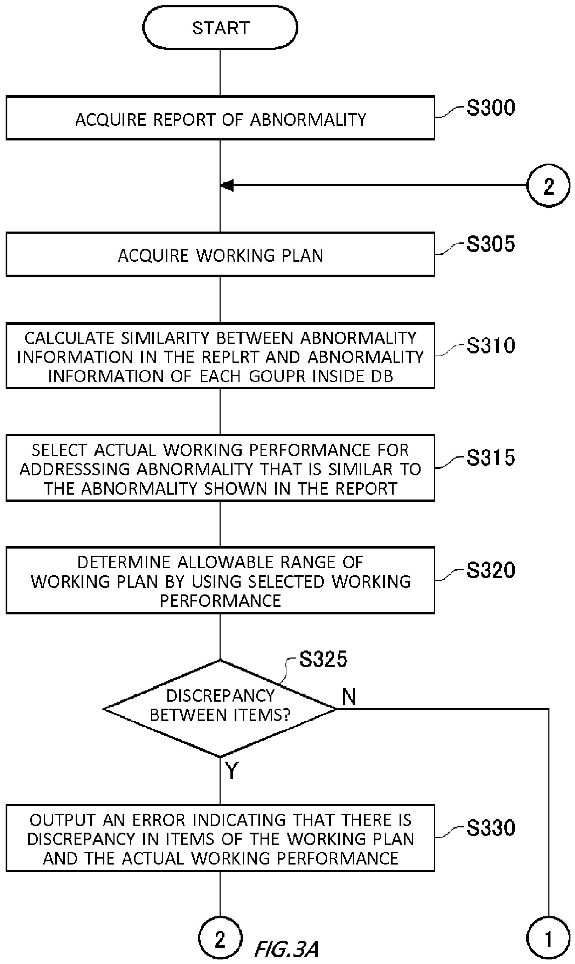

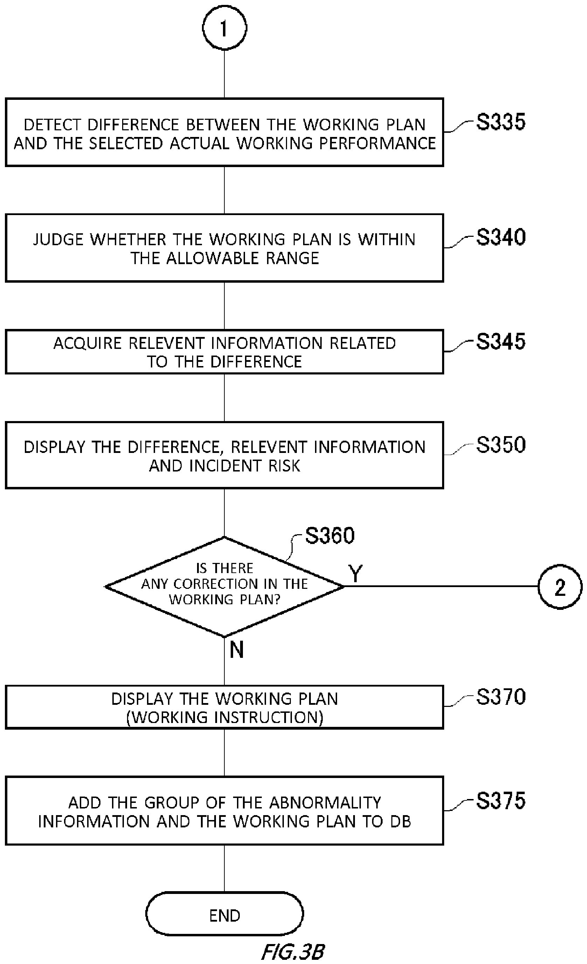

Fig. 3A and Fig. 3B illustrate the operation flow of the apparatus 100 according to the present embodiment. The apparatus 100 performs the operation flow illustrated in Fig. 3A and Fig. 3B each time the report of the abnormality is received. In S300 (step 300), the report acquirement unit 120 acquires the report of the abnormality occurred in the facility 10. In S305, the working plan acquirement unit 165 acquires the working plan created by the administrator 35, for addressing the abnormality of the present cycle.

In S310, the similarity calculation unit 155 calculates the similarity between the abnormality information in the report acquired by the report acquirement unit 120 and the abnormality information included in each of the plurality of groups stored in the DB 130. In the present embodiment, when the value of each item of the abnormality information (the equipment information and the abnormality content) in the report matches (or is included in) the value of the corresponding item in the abnormality information of the comparison target, the similarity calculation unit 155 assigns a higher similarity score compared to the case where they do not match. Then, the similarity calculation unit 155 sets the combination obtained by calculating the total of the similarity scores for each item or the like as the similarity.

When the abnormality information includes an abnormality content described by the text, the similarity calculation unit 155 may calculate the similarity of the abnormality information based on the similarity of the equipment information and the similarity of the text recorded as the abnormality content between the abnormality information in the report and the abnormality information included in each of the plurality of groups. For example, for the item input by the text such as a detailed description or the like of the abnormality, the similarity calculation unit 155 may convert the text into feature vectors by using whether each of a plurality of words (for example, predetermined registered terms) has appeared in the text, or the appearance frequency of each of the plurality of words or the like, and calculate the similarity between the feature vectors (for example, inner product between unit vectors). Herein, the similarity calculation unit 155 may also calculate the similarity between the text included in the abnormality information in the report and the text included in in the abnormality information of the comparison target by using the feature vectors including TF-IDF for each of the plurality of words. The similarity calculation unit 155 may calculate the similarity of the abnormality information in the report and the abnormality information stored in the DB 130 by taking the total of the similarity of the non-text portion of the abnormality information and the similarity of the text portion by way of adding or taking the sum of squares or the like.

In S315, the selection unit 160 selects at least one actual work performance for addressing the abnormality shown in the report based on the similarity calculated by the similarity calculation unit 155. The selection unit 160 according to the present embodiment selects, with a higher priority, the actual work performance associated to the abnormality information with a higher similarity to the abnormality information in the report. The selection unit 160 may select, from each group stored in the DB 130, k (k is an integer of 1 or 2 or more) actual work performances associated to k pieces of predetermined abnormality information selected in descending order of the similarity calculated by the similarity calculation unit 155 (k-nearest neighbor method).

Herein, "selecting with a higher priority" means that when other conditions are the same, a required number of actual work performances are selected in a descending order of the priority, on the other hand, when other conditions are different, the actual work performance with a higher priority may not be selected, and an actual work performance with a lower priority may be selected. For example, when probability is employed in selecting actual work performances, the selection unit 160 may select the actual work performance with a higher probability the higher the similarity calculated by the similarity calculation unit 155.

In S320, the determination unit 163 determines an allowable range of the working plan by using at least one group selected by the selection unit 160. For example, for the item indicating whether a particular preparation or process is necessary in the maintenance preparation work or the maintenance work, when the item in the actual work performance exceeding a predetermined reference ratio (for example, 90%) of the actual work performance selected by the selection unit 160 is recorded to be necessary (or unnecessary), the determination unit 163 may determine only being necessary (or being unnecessary) as the allowable range for the item.

Also, for the item indicating the numerical value of the number of workers or the like, the determination unit 163 may determine the allowable range of the item based on the distribution of the values of the item in at least one actual work performance selected by the selection unit 160. For example, the determination unit 163 may determine the range from the minimum value to the maximum value of the value of the item in at least one actual work performance as the allowable range. Also, the determination unit 163 may determine the allowable range (allowable margin of error), for example, within a range of 3 sigma by using the mean and variance of the value of the item in at least one actual work performance. The determination unit 163 may determine the allowable range for the item expressed by the numerical value with any other predetermined method.

In S325, the error output unit 172 judges whether there is discrepancy between each item included in the working plan and each item included in the actual work performance of at least one group selected by the selection unit 160. For example, when the item of "number of workers" exists in the actual work performance in the DB 130, but the item of "number of workers" is not included in the working plan acquired by the working plan acquirement unit 165 (the number of workers is not input or the like), the error output unit 172 may judge that there is discrepancy between items. Also, for example, when an item indicating that a preparation of a tool is required in the working plan acquired by the working plan acquirement unit 165 is included, but the item indicating whether the tool is necessary does not exist in the actual work performance in the DB 130, the error output unit 172 may judge that there is discrepancy between items.

When it is judged that there is discrepancy between items ("Y" in S325), in S330, the error output unit 172 outputs an error indicating that there is discrepancy in items of the working plan and the actual work performance. Then, the apparatus 100 advances the processing to S305 in order to acquire a working plan where the actual work performance matches the item. Herein, the apparatus 100 may also conduct the processing of adding a new item to each actual work performance in the DB 130 according to the instruction of the administrator 35 or the like. When there is no discrepancy between items ("N" in S325), the apparatus 100 advances the processing to S335 in Fig. 3B.

In S335, the difference detection unit 174 detects the difference between the working plan and the actual work performance of at least one group selected by the selection unit 160. The difference detection unit 174 may detect the difference between the working plan and the actual work performance of at least one group, based on the difference of each item including at least one of the number of workers, working time or tools used in the work, between the working plan and the actual work performance of at least one group.

For the item indicated by the numerical value such as the number of workers or working time, the difference detection unit 174 may detect the difference by calculating the difference obtained by subtracting the value of the item in the working plan from the value of the item in the actual work performance. When 2 or more actual work performances are selected, the difference detection unit 174 may calculate the minimum value and the maximum value of the difference by subtracting the value of the item in the working plan from each of the minimum value and the maximum value of the item in the 2 or more actual work performances. Also, the difference detection unit 174 may calculate the difference by subtracting the value of the item in the working plan from the mean value of the item in 2 or more actual work performances.

For the item indicated by a flag with a value such as 1 (necessary) or 0 (unnecessary) showing whether the process is necessary or the like, when the value of the item in the working plan is "necessary" and the value of the item in the actual work performance is "unnecessary", the difference detection unit 174 may detect "-process" indicating that the process is not in the actual work performance or the like as the difference. Also, when the value of the item in the working plan is "unnecessary" and the value of the item in the actual work performance is "necessary", the difference detection unit 174 may detect "+process" indicating that the process is in the actual work performance or the like as the difference.

When 2 or more actual work performances are selected, when the value of the item in the working plan is "necessary" and the value of the item in any of 2 or more actual work performance is "unnecessary", the difference detection unit 174 may detect "-process" indicating that the process is not in the actual work performance or the like as the difference. Also, when the value of the item in the working plan is "unnecessary" and the value of the item in any actual work performance is "necessary", the difference detection unit 174 may detect "+process" indicating that the process is in the actual work performance or the like as the difference.

Alternatively, the difference detection unit 174 may set the representative value of the item in the actual work performance as "necessary" when the number of the actual work performances with the value of the item being "necessary" is greater than those of the actual work performances with the value of the item being "unnecessary", set the representative value of the item in the actual work performance as "unnecessary" when the number of the actual work performances with the value of the item being "unnecessary" is greater than those of the actual work performances with the value of the item being "necessary", and detect the difference between the value of the item in the working plan and the representative value of the item in the actual work performance.

Instead of the above, the difference detection unit 174 may detect the difference by subtracting the value of the item in the actual work performance from the value of the item in the working plan. Also, the difference detection unit 174 may detect the difference by specifying the item with a difference in the value of the item between the working plan and the actual work performance, without calculating the difference of the item between the working plan and the actual work performance.

In S340, the judgement unit 176 judges whether the working plan is within the allowable range by using the allowable range determined in S320. In S345, the relevant information acquirement unit 178 acquires the relevant information related to the difference between the working plan and the actual work performance of at least one group that is selected. The relevant information acquirement unit 178 may access to the relevant information database that stores relevant information of descriptions, advices, or notes or the like in connection with the item associated to each item of the working plan and the actual work performance, and acquire the relevant information associated to the item with the difference in the working plan and the actual work performance from the database. Also, the relevant information acquirement unit 178 may acquire the more detailed information related to the actual work performance such as photos during the work associated to the selected actual work performance from the DB 130 or other database as the relevant information.

In S350, the difference display processing unit 182 in the display processing unit 180 conducts display processing for displaying the difference detected by the difference detection unit 174 on the display apparatus 105. Herein, the difference display processing unit 182 may conduct the processing for comparing and emphasizing the item with the difference in each item between the working plan and the actual work performance of at least one group exceeding the predetermined threshold with other items, and displaying the item on the display apparatus 105. Emphasizing and displaying the item in such a way may include the display of the item to be emphasized by at least one of bolding or italicizing, changing the color (for example, red), enlarging the text, or adding an underline or border. Also, the difference display processing unit 182 may display in an identifiable manner whether the difference of each item is within the allowable range by using the judgement result in S340 by emphasizing and displaying the item that is outside the allowable range, for example. The relevant information display processing unit 184 inside the display processing unit 180 conducts the processing to display the relevant information acquired by the relevant information acquirement unit 178 on the display apparatus 105.

For the item in the case where the difference of each item between the working plan and the actual work performance of at least one group exceeds a predetermined threshold, the risk display processing unit 186 inside the display processing unit 180 conducts processing for displaying the incident risk that may occur due to the difference of the item on the display apparatus 105. Herein, the threshold used to judge whether to display the incident risk (also indicated as a "first threshold") and the threshold used to judge whether to emphasize and display the difference of the item (also indicated as a "second threshold") may be different for each item, or may be the same. The first threshold is greater than the second threshold for the same item. That is, when the difference of the item becomes somewhat large and exceeds the second threshold, the display processing unit 180 alerts the administrator 35 by emphasizing and displaying the item. When the difference of the item further increases and exceeds the first threshold, the display processing unit 180 describes the specific risk to the administrator 35 by displaying the incident risk that may occur due to the difference of the item.

When the difference of the item associated to each item of the working plan and the actual work performance exceeds the first threshold, the risk display processing unit 186 may acquire the description of the incident risk corresponding to the item with the difference of the item exceeding the first threshold by accessing the risk database that stores the description of the incident risk.

The administrator 35 takes the difference between the working plan and the actual work performance displayed on the display apparatus 105, the relevant information related to the difference and the incident risk along with the difference into account, and instructs the working plan acquirement unit 165 to correct the working plan according to requirements. In S360, the working plan acquirement unit 165 judges whether there has been an input of the correction instruction of the working plan, advances the processing to S305 according to the input of the correction instruction of the working plan and acquires the corrected working plan.

When the working plan is confirmed without an input of the correction instruction of the working plan ("N" in S360), the working plan display processing unit 190 conducts the display processing to display the working plan on the display apparatus 110 in order to instruct the start of the work following the working plan to the worker 40 in S370. Accordingly, the worker 40 can conduct the maintenance preparation work and the maintenance work designated by the working plan.

In S375, the adding unit 195 adds the group of the abnormality information about the abnormality of the present cycle occurred in the facility 10 and the working plan used to address the abnormality to the DB 130 via the DB connecting unit 140, as the group of the abnormality information and the actual work performance. The adding unit 195 may add the confirmed working plan to the DB 130. When there is a correction of the working plan during the work by the worker 40, the adding unit 195 may receive the corrected working plan from the working plan acquirement unit 165 and add it to the DB 130.

According to the apparatus 100 shown above, the difference between the working plan that is drafted according to the fact that the abnormality of the facility 10 has been reported, and the actual work performance for addressing the abnormality that is the same as or similar to that in the past can be detected and presented to the administrator 35. Accordingly, the apparatus 100 can prompt the administrator 35 to improve or review the working plan when there is an error in the working plan or when the working plan can be improved. This allows the apparatus 100 to recover the facility 10 from the abnormal state more quickly and efficiently, thereby improving the productivity of the facility 10.

Also, according to the apparatus 100, when the difference of the item between the working plan and the actual work performance satisfies a predetermined condition, at least one of the relevant information or the incident risk is presented to the administrator 35. The apparatus 100 can display relevant information about the item with a large difference between the working plan and the actual work performance and prompt examination by the administrator 35, and display the description of the incident risk about the item where the difference between the working plan and the actual work performance is in particular large and the incident risk is possible to occur, and ask for review by the administrator 35. In this manner, the apparatus 100 can guide the administrator 35 to create an appropriate working plan to prevent the occurrence of a problem in the facility 10.

The apparatus 100 may be used as a maintenance management/ maintenance activity proposing system integrated with the CMMS (Computerized Maintenance Management System). The CMMS may have the functionalities of the report acquirement unit 120, the working plan acquirement unit 165 and the working plan display processing unit 190 and so on. In this case, the CMMS acquires the report of the abnormality occurred in the facility 10 and provides it to the administrator 35, and acquires the working plan for addressing the abnormality from the administrator 35. The apparatus 100 receives the report of the abnormality and the working plan from the CMMS, and conducts selection of the actual work performance and evaluation of the working plan.

When there is a difference between the working plan and the actual work performance, the relevant information acquirement unit 178 may acquire the relevant information stored in the CMMS. Also, the apparatus 100 may acquire the corrected working plan input into the CMMS by the administrator 35 according to the output of the evaluation result of the working plan and reevaluate the working plan. The CMMS provides the confirmed working plan to the worker 40 and make the work to be conducted following the working plan. In this manner, the apparatus 100 can work in cooperation with the CMMS and conduct maintenance management, and arrange to improve the working plan for addressing the abnormality that newly occurs.

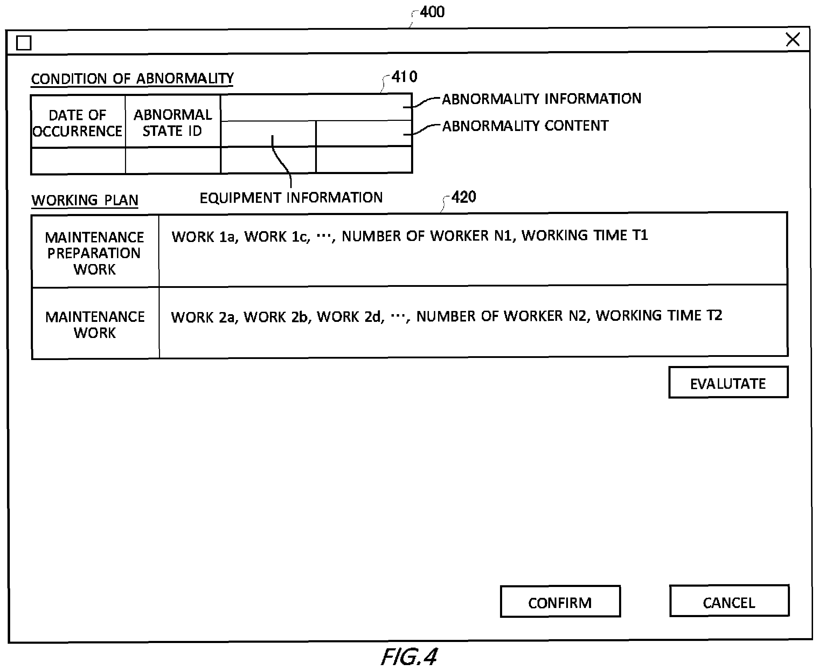

Fig. 4 illustrates a first display example by the apparatus 100 according to the present embodiment. The display processing unit 180 inside the apparatus 100 may conduct the display processing for displaying the display screen 400 on the entire screen or a window or the like of the display apparatus 105 in response to the reported abnormality. The display screen 400 includes an abnormality display field 410 and a working plan input field 420.

The display processing unit 180 conducts the display processing for displaying the abnormality included in the report acquired by the report acquirement unit 120 in the abnormality display field 410 in order to prompt the administrator 35 to input the working plan in S305 of Fig. 3A. The abnormality display field 410 includes the display of the date of occurrence of the abnormality, the abnormality state ID, and the abnormality information (equipment information and abnormality content).

Also, the display processing unit 180 conducts the display processing for displaying the working plan input field 420 in order to input the working plan. The working plan input field 420 accepts working plan input from the administrator 35, including plans for maintenance preparation work and maintenance work. In the example of the present drawing, for the maintenance preparation work, the working plan including work 1a and 1c and so on being required, the number of workers being N1, the working time being T1 are input into the working plan input field 420. Also, for the maintenance work, the working plan including work 2a, 2b and 2d and so on being required, the number of workers being N2, the working time being T2 are input into the working plan input field 420. Accordingly, the working plan acquirement unit 165 acquires the working plan input into the working plan input field 420.

When the working plan acquirement unit 165 detects that the "evaluate" button of a working plan input screen 400 has been pressed, the apparatus 100 advances the processing to S310 of Fig. 3A, and conducts the evaluation of the working plan (S310 to S345 of Fig. 3A) and the display of the evaluation result (S350 of Fig. 3A). Also, when the working plan acquirement unit 165 detects that the "confirm" button of the working plan input screen 400 has been pressed, the apparatus 100 advances the processing from S360 to S370 of Fig. 3B, and conducts the display processing for displaying the confirmed working plan to the worker 40.

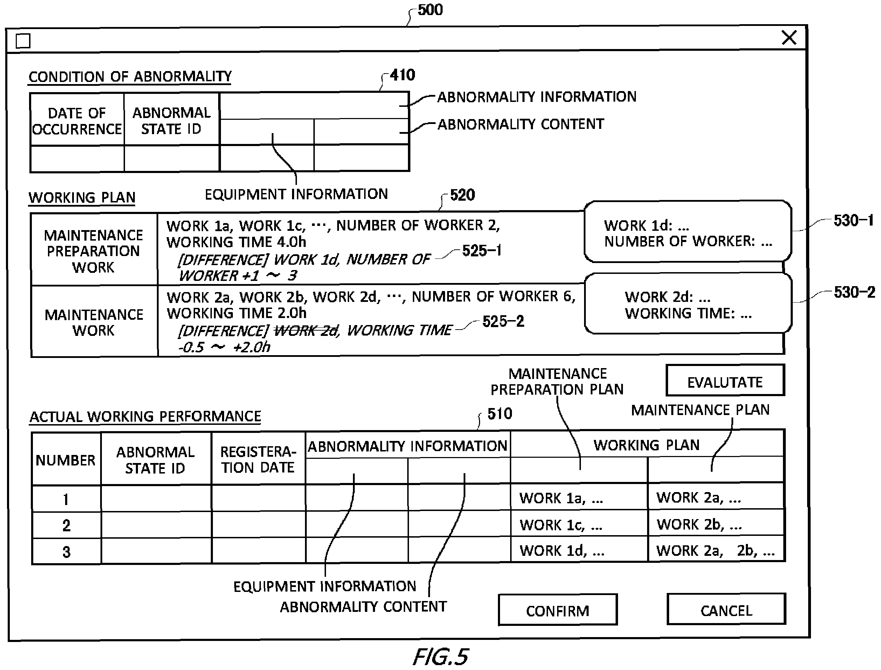

Fig. 5 illustrates a second display example by the apparatus 100 according to the present embodiment. The display processing unit 180 inside the apparatus 100 updates the display as shown in a difference display screen 500 in the present drawing, in response to the "evaluation" button in the working plan input screen 400 of Fig. 4 being pressed and the working plan being evaluated. The difference display screen 500 of the present drawing includes an abnormality display field 410, an actual work performance field 510 and a working plan display field 520.

Since the abnormality display field 410 is similar to that in Fig. 4, the description is omitted. The actual work performance field 510 displays at least one actual work performance that is selected by the selection unit 160.

The working plan display field 520 adds and displays difference displays 525-1~2 indicating the difference between the working plan and the actual work performance, and relevant information displays 530-1~2 indicating the relevant information related to the item with a difference to the working plan input field 420 of Fig. 4. The difference display processing unit 182 inside the display processing unit 180 conducts the display processing for displaying the working plan display fields 520-1~2. In the example of the present drawing, since work 1d included in at least one actual work performance displayed in the actual work performance field 510 is not included in the working plan input into the maintenance preparation work field of the working plan input field 420 (regarded as unnecessary), the difference display processing unit 182 conducts the display processing for displaying the work 1d as a difference.

Also, the work 2d that is not included in any actual work performance displayed in the actual work performance field 510 is included in the working plan input into the maintenance work of the working plan input field 420, the difference display processing unit 182 conducts the display processing for displaying the fact that the work 2d is not in the actual work performance as a difference. Also, the difference display processing unit 182 displays the difference about the item expressed by the numerical value of the number of workers and so on.

The relevant information display processing unit 184 inside the display processing unit 180 conducts the display processing of the relevant information display 530-1~2 indicating the relevant information about the item with the difference between the working plan and the actual work performance. In the example of the present drawing, the relevant information display processing unit 184 is configured to pop-up the relevant information display 530-1 into the working plan input screen 400, and display the relevant information about the work 1d with the difference with respect to the maintenance preparation work and the number of workers. Also, the relevant information display processing unit 184 is configured to pop-up the relevant information display 530-2 inside the working plan input screen 400, and display the relevant information about the work 2d with the difference with respect to the maintenance work and the working time. The risk display processing unit 186 may conduct the display processing for displaying the description related to the incident risk similarly to the relevant information display 530-1~2, in response to the incident risk being judged to exist.

Note that in the examples of Fig. 4 and Fig. 5, the display processing unit 180 generates a display screen for displaying the abnormality display field 410, the working plan input field 420, the actual work performance field 510, the working plan display fields 520-1~2 and the relevant information displays 530-1~2 in the same window. Alternatively, the display processing unit 180 may display these fields in separate windows.

Various embodiments of the present invention may be described with reference to flowcharts and block diagrams whose blocks may represent (1) steps of processes in which operations are performed or (2) sections of devices responsible for performing operations. Certain steps and sections may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

A computer-readable medium may include any tangible device that can store instructions to be executed by a suitable device, and as a result, the computer-readable medium having instructions stored thereon includes an article of manufacture including instructions which can be executed to create means for performing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like; and a conventional procedural programming language such as a "C" programming language or a similar programming language.

The computer readable instructions may be provided for a processor or programmable circuitry of a general purpose computer, special purpose computer, or other programmable data processing devices such as a computer locally or via a wide area network (WAN) such as a local area network (LAN), the Internet, or the like, and execute the computer readable instructions to create means for executing the operations designated in flowcharts or block diagrams. An example of the processor includes a computer processor, processing unit, microprocessor, digital signal processor, controller, microcontroller, etc.

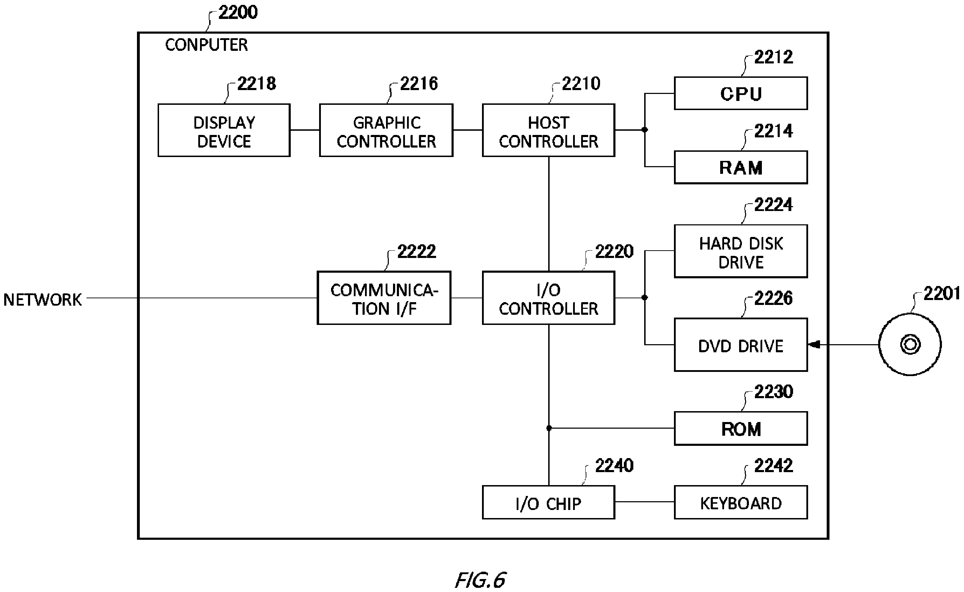

FIG. 6 illustrates an example of a computer 2200 in which a plurality of aspects of the present invention may be wholly or partly embodied. A program installed in the computer 2200 may cause the computer 2200 to function as an operation associated with the apparatuses according to the embodiments of the present invention or as one or more sections of the apparatuses, or may cause the operation or the one or more sections to be executed, and/or may cause the computer 2200 to execute a process according to the embodiments of the present invention or a stage of the process. Such programs may be executed by a CPU 2212 to cause the computer 2200 to perform certain operations associated with some or all of the blocks in the flowcharts and block diagrams described in the present specification.

The computer 2200 according to the present embodiment includes the CPU 2212, a RAM 2214, a graphics controller 2216, and a display apparatus 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display apparatus 2218.

The communication interface 2222 communicates with other electronic devices via a network. The hard disk drive 2224 stores programs and data used by the CPU 2212 in the computer 2200. The DVD-ROM drive 2226 reads the programs or the data from the DVD-ROM 2201, and provides the hard disk drive 2224 with the programs or the data via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, and the like.

The program is provided by a computer-readable medium such as the DVD-ROM 2201 or the IC card. The program is read from a computer-readable medium, installed in the hard disk drive 2224, the RAM 2214, or the ROM 2230 which are also examples of the computer-readable medium, and executed by the CPU 2212. The information processing described in these programs is read by the computer 2200 and provides cooperation between the programs and various types of hardware resources. The apparatus or method may be configured by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing on the basis of processing described in the communication program. Under the control of the CPU 2212, the communication interface 2222 reads transmission data stored in a transmission buffer processing area provided in a recording medium such as the RAM 2214, the hard disk drive 2224, the DVD-ROM 2201, or the IC card, transmits the read transmission data to the network, or writes reception data received from the network in a reception buffer processing area or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Next, the CPU 2212 writes back the processed data to the external recording medium.

Various types of information such as various types of programs, data, tables, and databases may be stored in a recording medium and subjected to information processing. The CPU 2212 may execute various types of processing on the data read from the RAM 2214 to write back a result to the RAM 2214, the processing being described throughout the present disclosure, specified by instruction sequences of the programs, and including various types of operations, information processing, condition determinations, conditional branching, unconditional branching, information retrievals/replacements, or the like. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The programs or software modules described above may be stored in a computer-readable medium on or near the computer 2200. In addition, a recording medium such as a hard disk or a RAM provided in a server system connected to a dedicated communication network or the Internet can be used as a computer-readable medium, thereby providing a program to the computer 2200 via the network.

While the embodiment of the present invention has been described, the technical scope of the invention is not limited to the above-described embodiment. It is apparent to persons skilled in the art that various alterations and improvements can be added to the above-described embodiment. It is also apparent from the description of the claims that the embodiment to which such alterations or improvements are made can be included in the technical scope of the present invention.

The operations, procedures, steps, and stages of each process performed by an apparatus, system, program, and method shown in the claims, specification, or drawings can be performed in any order as long as the order is not indicated by "prior to," "before," or the like and as long as the output from a previous process is not used in a later process. Even if the process flow is described using phrases such as "first" or "next" in the claims, specification, or drawings, it does not necessarily mean that the process must be performed in this order.

### EXPLANATION OF REFERENCES

10: facility; 20: facility equipment; 30: inspector; 35: administrator; 40: worker; 100: apparatus; 105: display apparatus; 110: display apparatus; 120: report acquirement unit; 130: DB; 140: DB connecting unit; 150: actual work performance output unit; 155: similarity calculation unit; 160: selection unit; 163: determination unit; 165: working plan acquirement unit; 170: working plan evaluation unit; 172: error output unit; 174: difference detection unit; 176: judgement unit; 178: relevant information acquirement unit; 180: display processing unit; 182: difference display processing unit; 184: relevant information display processing unit; 186: risk display processing unit; 190: working plan display processing unit; 195: adding unit; 400: working plan input screen; 410: abnormality display field; 420: working plan input field; 500: difference display screen; 510: actual work performance field; 520: working plan display field; 525-1~2: difference display; 530-1~2: relevant information display; 2200: computer; 2201: DVD-ROM; 2210: host controller; 2212: CPU; 2214: RAM; 2216: graphics controller; 2218: display apparatus; 2220: input/output controller; 2222: communication interface; 2224: hard disk drive; 2226: DVD-ROM drive; 2230: ROM; 2240: input/output chip; 2242: keyboard.

## Claims

1. An apparatus, comprising:
a database connection unit connected to a database for storing a plurality of groups respectively including abnormality information about an abnormality occurred in a facility and an actual work performance for addressing the abnormality;
a report acquirement unit for acquiring a report of an abnormality occurred in the facility;
a working plan acquirement unit for acquiring a working plan for addressing an abnormality occurred in the facility;
a similarity calculation unit for calculating a similarity between abnormality information in the report and abnormality information included in each of the plurality of groups;
a selection unit for selecting at least one group from the plurality of groups based on a similarity calculated by the similarity calculation unit;
a difference detection unit for detecting a difference between the working plan and the actual work performance of the at least one group; and
a display processing unit for conducting display processing for displaying the difference.

2. The apparatus according to claim 1, wherein the selection unit is configured to select, with higher priority, a group including abnormality information with the similarity being higher, among the plurality of groups.

3. The apparatus according to claim 1, further comprising:
a relevant information acquirement unit for acquiring relevant information related to the difference between the working plan and the actual work performance of the at least one group,
wherein the display processing unit includes a relevant information display processing unit for conducting processing for displaying the relevant information on a display apparatus.

4. The apparatus according to claim 1, wherein the difference detection unit is configured to detect the difference between the working plan and the actual work performance of the at least one group based on a difference of each item between the working plan and the actual work performance of the at least one group, including at least one of a number of workers, working time, or tools used in a work.

5. The apparatus according to claim 4, wherein for an item with a difference of each item between the working plan and the actual work performance of the at least one group exceeding a predetermined threshold, the display processing unit includes a risk display processing unit for conducting processing for displaying an incident risk that may occur due to the difference of the item on a display apparatus.

6. The apparatus according to claim 1, further comprising:
a determination unit for determining an allowable range of the working plan by using the at least one group selected by the selection unit; and
a judgement unit for judging whether the working plan is within the allowable range.

7. The apparatus according to claim 1, further comprising an error output unit for outputting an error according to a fact that there has been a discrepancy in each item included in the working plan and each item included in the actual work performance of the at least one group.

8. The apparatus according to claim 4, wherein the display processing unit includes a difference display processing unit for conducting processing for comparing and emphasizing an item with a difference of each item between the working plan and the actual work performance of the at least one group exceeding a predetermined threshold to other items, and displaying the item on a display apparatus.

9. The apparatus according to any one of claims 1 to 8, further including an adding unit for adding a group of abnormality information about an abnormality occurred in the facility and a working plan used to address the abnormality to the database as a group of abnormality information and an actual work performance.

10. A method, comprising:
acquiring, by a computer, a report of an abnormality occurred in a facility; and
acquiring, by the computer, a working plan for addressing an abnormality occurred in the facility;
accessing, by the computer, to a database for storing a plurality of groups respectively including abnormality information about an abnormality occurred in the facility and an actual work performance for addressing the abnormality;
calculating, by the computer, a similarity between abnormality information in the report and abnormality information included in each of the plurality of groups;
selecting, by the computer, at least one group from the plurality of groups based on a calculated similarity;
detecting, by the computer, a difference between the working plan and an the actual work performance of the at least one group; and
conducting display processing for displaying the difference.

11. A program, when executed by a computer, causing the computer to function as:
a database connection unit connected to a database for storing a plurality of groups respectively including abnormality information about an abnormality occurred in a facility and an actual work performance for addressing the abnormality;
a report acquirement unit for acquiring a report of an abnormality occurred in the facility;
a working plan acquirement unit for acquiring a working plan for addressing an abnormality occurred in the facility;
a similarity calculation unit for calculating a similarity between abnormality information in the report and abnormality information included in each of the plurality of groups;
a selection unit for selecting at least one group from the plurality of groups based on a similarity calculated by the similarity calculation unit;
a difference detection unit for detecting a difference between the working plan and the actual work performance of the at least one group; and
a display processing unit for conducting display processing for displaying the difference.
